# DEMANDE DE BREVET EUROPEEN

(11) **EP 4 846 899 A1**
(43) Date de publication de la demande: **02.12.2026**
(21) Numéro de dépôt: 26182087.2
(22) Date de dépôt: 29.05.2026
(51) Int. Cl.: A47J 36/06

(54) **COUVERCLE AMOVIBLE CHAUFFANT POUR APPAREIL DE PRÉPARATION CULINAIRE**

(30) Priorité: 30.05.2025 FR 2505835
(71) Demandeur: SEB S.A., 69130 Ecully (FR)
(72) Inventeur: GUEZOU, Charly, 69134 ECULLY CEDEX (FR); DE CARA, Gérald, 69134 ECULLY CEDEX (FR); GERARD, Emmanuel, 69134 ECULLY CEDEX (FR)
(74) Mandataire: SEB Développement

(57) **Abrégé**

Couvercle chauffant (100) amovible pour un appareil de préparation culinaire (A) comprenant un récipient de travail (200) et présentant une poignée (201), le couvercle chauffant (100) comprenant :
un corps principal (1) comprenant une paroi extérieure (10) présentant au moins un orifice d'entrée d'air (E1) ; et
un système de cuisson (2) comprenant un élément chauffant (21) ;
le couvercle étant caractérisé en ce qu'il comprend en outre
un corps périphérique (3) comprenant une paroi latérale périphérique (30) définissant un logement (36) propre à entourer au moins partiellement la poignée de l'appareil de préparation culinaire lorsque le couvercle chauffant (100) est agencé sur le récipient de travail,
un ventilateur de refroidissement (4) monté mobile en rotation autour d'un axe (X), et agencé de sorte qu'une rotation du ventilateur de refroidissement (4) autour de l'axe (X) génère un flux d'air de refroidissement s'écoulant depuis l'orifice d'entrée d'air (E1) vers le logement (36).

## Description

### DOMAINE TECHNIQUE

La présente divulgation se rapporte au domaine général des appareils de préparation culinaire, et plus particulièrement aux couvercles amovibles de tels appareils ayant des fonctions de chauffage.

### ETAT DE LA TECHNIQUE

Il est connu de disposer d'un couvercle amovible adapté au chauffage d'aliments disposés dans la cuve d'un appareil de préparation culinaire permettant la cuisson et le mélange des aliments. La présence du couvercle permet d'éviter des projections en dehors de la cuve, et de préserver la chaleur à l'intérieur de la cuve.

Plus récemment, des appareils de préparation culinaire permettant de saisir et griller des aliments par ventilation combinée à un rayonnement ont été proposés. Ces appareils, aussi dénommés « *air fryers »* sont devenus très populaires en raison de leur capacité à cuire les aliments de manière saine et rapide, en utilisant peu ou pas d'huile.

Afin d'adapter des appareils de préparation culinaire, et en particulier des appareils électriques, les fonctions de cuisson par rayonnement et de ventilation peuvent être intégrées dans le couvercle amovible. Cette solution permet d'améliorer la fonctionnalité des appareils de préparation culinaire existants.

Par exemple, le couvercle amovible proposé par FR 3 115 668 A1 est adapté pour un appareil comprenant une cuve agencée à l'intérieur d'une embase.

Les solutions existantes ne sont toutefois pas adaptées pour tout type d'appareil de préparation culinaire. En particulier, de tels couvercles peuvent entrainer des augmentations de température de l'appareil de préparation culinaire, ce qui peut, selon l'agencement de cet appareil, induire un risque majeur de brûlure pour l'utilisateur.

### EXPOSE DE L'INVENTION

Un but de la présente divulgation est de proposer un couvercle chauffant destiné à être agencé sur un récipient d'appareil de préparation culinaire, capable de limiter l'augmentation en température des poignées du récipient lors de la chauffe et donc de réduire le risque de brulure de l'utilisateur.

Ce but est atteint par un couvercle chauffant amovible pour un appareil de préparation culinaire comprenant un récipient de travail et présentant une poignée, le couvercle chauffant comprenant :
un corps principal comprenant une paroi extérieure présentant au moins un orifice d'entrée d'air ; et
   un système de cuisson comprenant un élément chauffant ;
le couvercle étant caractérisé en ce qu'il comprend en outre
un corps périphérique comprenant une paroi latérale périphérique définissant un logement propre à entourer au moins partiellement la poignée de l'appareil de préparation culinaire lorsque le couvercle chauffant est agencé sur le récipient de travail,
un ventilateur de refroidissement monté mobile en rotation autour d'un axe, et agencé de sorte qu'une rotation du ventilateur de refroidissement autour de l'axe génère un flux d'air de refroidissement s'écoulant depuis l'orifice d'entrée d'air vers le logement.

Lorsque le couvercle chauffant est agencé sur l'appareil de préparation culinaire et est en fonctionnement, l'élément chauffant chauffe les aliments contenus dans le récipient de travail ce qui contribue à réchauffer le récipient et sa poignée.

Le logement 36 aménagé par la paroi du corps périphérique du couvercle entoure la poignée et est en communication de fluide avec la cavité dans laquelle est agencé le ventilateur de refroidissement. Le couvercle est conçu de sorte que le flux d'air de refroidissement généré par le ventilateur de refroidissement est dirigé en direction du logement 36. La poignée située dans le logement 36 est alors balayée par le flux d'air de refroidissement, et est refroidie par convection.

Ainsi, lorsque la préparation culinaire est terminée, l'utilisateur peut saisir le récipient par la poignée sans risquer de se brûler, si désiré après avoir retiré le couvercle chauffant.

L'invention est avantageusement complétée par les caractéristiques suivantes, prises individuellement ou en l'une quelconque de leurs combinaisons techniquement possibles :
- Le corps périphérique comprend une paroi interne délimitant un canal de circulation d'air interne en communication de fluide avec le logement, la paroi interne s'étendant autour du ventilateur de refroidissement, de sorte que le flux d'air de refroidissement est dirigé vers le logement par le canal de circulation d'air interne. Cela permet d'accélérer le refroidissement de la poignée en maximisant le flux d'air de refroidissement.
- Le corps périphérique comprend un conduit de circulation débouchant sur le logement, de sorte que le flux d'air de refroidissement s'écoule vers le logement à travers le conduit de circulation. Cela permet de diriger le flux selon la surface à refroidir et d'augmenter l'échange thermique.

- Le corps périphérique comprend une paroi externe configurée pour entourer au moins partiellement le récipient. Cela permet d'avoir une couche d'isolant supplémentaire entre la paroi latérale périphérique et la paroi externe afin de réduire la température de la paroi externe et réduire davantage le risque de brûlure.
- Un espace est délimité entre la paroi latérale périphérique définissant le logement et la paroi externe. Cela permet d'avoir une couche d'air isolant entre la paroi latérale périphérique et la paroi externe afin de réduire la température de la paroi externe et réduire davantage le risque de brûlure.
- La paroi latérale périphérique est fabriquée dans un matériau résistant à la chaleur comprenant un polymère plastique. Cela permet d'augmenter la durabilité de l'appareil et d'éviter des déformations du matériau exposé à la chaleur.
- Le corps périphérique comprend une partie supérieure destinée à recevoir le corps principal, et une partie inférieure comprenant la paroi latérale périphérique définissant le logement et destinée à être agencée sur le récipient de travail, la partie supérieure étant montée solidaire de la partie inférieure. Cela permet de faciliter l'assemblage du couvercle chauffant.
- Le couvercle chauffant comprend en outre une paroi inférieure destinée à être en vis-à-vis du récipient de travail lorsque le couvercle chauffant est agencé sur le récipient de travail, la paroi inférieure présentant au moins un orifice de sortie d'air, et le système de cuisson comprend en outre
   un arbre monté mobile en rotation autour de l'axe,
   un moteur configuré pour entrainer l'arbre en rotation autour de l'axe, et
   un ventilateur de convection monté sur l'arbre, de sorte qu'une rotation de l'arbre autour de l'axe entraine une circulation d'un flux d'air vers l'au moins un orifice de sortie d'air en balayant l'élément chauffant ;
   et dans lequel le ventilateur de refroidissement est monté sur l'arbre entre le moteur et le ventilateur de convection, de sorte que le moteur est balayé par le flux d'air de refroidissement s'écoulant en direction du logement. Cela permet à la fois de cuire des aliments contenus dans le récipient de travail par convection et rayonnement, et d'augmenter la compacité du couvercle en utilisant un arbre commun pour le ventilateur de refroidissement et le ventilateur de convection.
- Le ventilateur de refroidissement est un ventilateur à turbine centrifuge comprenant un disque s'étendant dans un plan sensiblement normal à l'axe et une pluralité d'aubes s'étendant depuis le disque d'un côté opposé à l'élément chauffant par rapport au disque. Cela permet d'augmenter le débit d'air et l'efficacité du refroidissement des poignées.
- Le couvercle chauffant comprend un dispositif de sécurité configuré pour alimenter électriquement le couvercle chauffant lorsque le couvercle chauffant est disposé sur le récipient de travail et que la poignée est reçue dans le logement, c'est-à-dire que le logement entoure au moins partiellement la poignée, le dispositif de sécurité étant en outre de préférence configuré pour couper une alimentation de l'élément chauffant lorsque la poignée n'est pas reçue dans le logement. Cela permet d'assurer que le couvercle chauffant ne puisse chauffer lorsqu'il n'est pas agencé sur le récipient de travail, et de réduire un risque de brûlure d'un utilisateur.
- Le dispositif de sécurité est activé par le poids du couvercle chauffant lorsque le couvercle chauffant est posé sur le récipient et que la poignée est reçue dans le logement. Cela permet un déclenchement simple et fiable de l'alimentation.
- Le dispositif de sécurité est configuré pour maintenir le couvercle chauffant fixement sur le récipient de travail, lorsque la poignée est reçue dans le logement. Cela permet d'assurer que le couvercle chauffant reste en place au cours de la préparation culinaire.
- La paroi latérale périphérique définit un logement additionnel, le logement additionnel étant propre à entourer une poignée additionnelle du récipient de travail lorsque le couvercle chauffant est agencé sur le récipient de travail. Cela permet d'adapter le couvercle chauffant à un appareil de préparation culinaire dont le récipient de travail présente une poignée additionnelle.

Selon un autre aspect, il est proposé un ensemble comprenant un appareil de cuisson électrique comprenant
un récipient de travail, et
une poignée,

l'ensemble comprenant en outre un couvercle chauffant amovible tel que décrit précédemment.

Le logement de l'ensemble ci-dessus peut être configuré pour délimiter un canal d'expulsion d'air autour de la poignée, lorsque le couvercle chauffant est agencé sur le récipient de travail, le flux d'air de refroidissement étant expulsé du couvercle chauffant par le canal d'expulsion d'air.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre un appareil de préparation culinaire prévu pour recevoir un couvercle chauffant selon l'invention.
La figure 2 est une vue en perspective d'un couvercle chauffant selon un mode de réalisation.
La figure 3 est une vue en coupe latérale du couvercle chauffant de la figure 2 selon un plan passant par l'axe de rotation de l'arbre.
La figure 4 est une vue en coupe du couvercle chauffant de la figure 2 selon un premier médian normal à l'axe de rotation de l'arbre.
La figure 5 est une vue éclatée du couvercle chauffant de la figure 2.

Sur l'ensemble des figures, les éléments similaires portent des références identiques.

### DESCRIPTION DETAILLEE DE L'INVENTION

### Appareil de préparation culinaire A

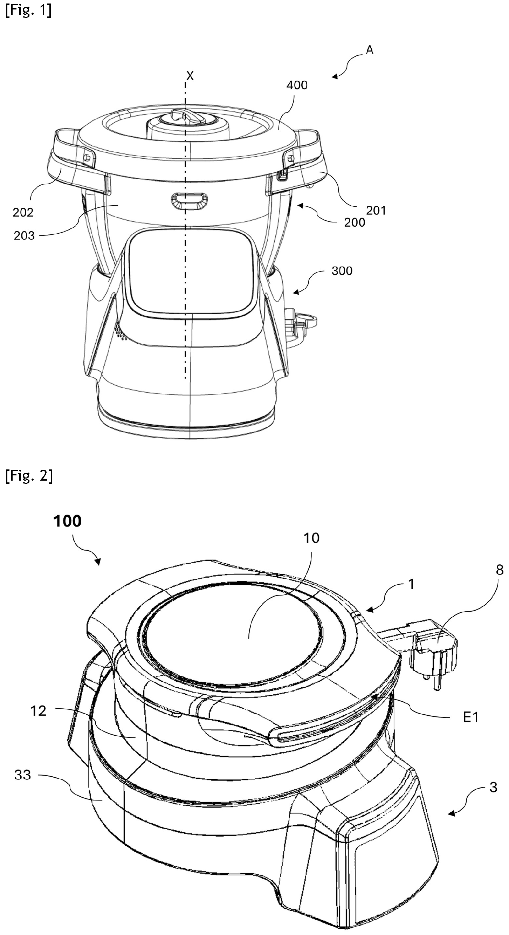

En référence à la figure 1, un appareil de préparation culinaire A comprend un récipient de travail 200 et un couvercle de récipient 400 configuré pour recouvrir le récipient de travail 200.

Dans le mode de réalisation illustré, l'appareil de préparation culinaire A est un robot électrique comprenant une embase 300 sur laquelle est agencé le récipient de travail 200. L'embase 300 peut comprendre un ou des éléments chauffants électriques destinés à chauffer le récipient de travail 200, et/ou le récipient de travail 200 peut comprendre un ou des éléments chauffants électriques, par exemple agencé(s) sous le fond du récipient de travail 200. L'embase 300 peut être motorisée, c'est-à-dire comprendre un système de motorisation entrainant un outil de travail agencé dans le récipient de travail 200 pour agir sur les ingrédients présents dans le récipient de travail 200. Le récipient de travail 200 peut être alors destiné à préparer différents types d'entremets chauds ou froids, ou des plats cuisinés.

L'invention s'étend plus généralement à d'autres types d'appareils de préparation culinaire A tels que des cocottes ou des casseroles ne comprenant pas d'embase 300, et destinés par exemple à être placé sur un système de chauffage à gaz ou électrique, telles que des plaques vitrocéramiques ou à induction. Par exemple, le récipient de travail 200 peut être saisi par les poignées 201, 202 et placé sur un feu de cuisson.

Dans le mode de réalisation illustré, le récipient de travail 200 présente une géométrie circulaire avec une élévation sensiblement tronconique. De façon alternative, le récipient de travail 200 peut avoir une forme cylindrique à base circulaire, rectangulaire, carrée ou ovale.

L'appareil de préparation culinaire A présente au moins un moyen de préhension du récipient de travail 200. Le récipient de travail 200 peut donc avoir une ou plusieurs poignées de préhension. Par exemple, dans le mode de réalisation illustré, le récipient de travail 200 comprend une première poignée 201 et une deuxième poignée 202. Les poignées 201, 202 sont diamétralement opposées par rapport au récipient de travail 200.

Les poignées 201, 202 sont positionnées sur une surface extérieure 203 du récipient de travail 200 et orientées vers l'extérieur du récipient de travail 200, de telle sorte que la manipulation du récipient de travail 200 par un utilisateur soit la plus aisée possible. De façon alternative, on comprendra que l'appareil de préparation culinaire A peut présenter une seule poignée 201 pour manipuler le récipient de travail 200. Le nombre de poignées peut être également strictement supérieur à deux.

Dans le mode de réalisation illustrée, la poignée 201 est courbée. De façon alternative, les poignées 201, 202 peuvent avoir des formes variées, par exemple carrées, losanges, ou ovales. L'appareil de préparation culinaire A peut également comprendre un moyen de préhension différent d'une poignée, tel qu'une anse.

La poignée 201 peut être fixe par rapport au récipient de travail 200. La poignée 201 est par exemple assemblée sur le récipient de travail 200 par un système d'attache mécanique comme des vis. Sans sortir du cadre de l'invention, la ou les poignées 201, 202 peuvent aussi être assemblées de manière amovible sur le récipient de travail 200 grâce à un système d'attache amovible.

De préférence, le récipient de travail 200 est formé dans un matériau pouvant résister à des températures de cuisson élevées. Le matériau utilisé est par exemple un alliage métallique comprenant du fer, de préférence un acier inoxydable.

La poignée 201 est de préférence réalisée dans un matériau peu conducteur de chaleur, par exemple en matériau plastique.

Comme cela est visible sur la figure 1, le couvercle de récipient 400 a une forme cylindrique de section circulaire. Alternativement, le couvercle de récipient 400 peut être de forme rectangulaire, carrée ou ovale, tant qu'il est adapté à la forme du récipient de travail 200.

### Couvercle chauffant 100

La figure 2 illustre un couvercle chauffant 100 prévu pour être utilisé sur le récipient de travail 200 à la place du couvercle de récipient 400. En référence à la figure 2, le couvercle chauffant 100 comprend un corps principal 1 et un corps périphérique 3.

Le corps principal 1 comprend une paroi extérieure 10. La paroi extérieure 10 présente au moins un orifice d'entrée d'air E1. Le corps principal 1 comprend une paroi latérale principale 12 dont le diamètre est sensiblement inférieur au diamètre du récipient de travail 200. La paroi extérieure 10 s'étend au-dessus de la paroi latérale principale 12, c'est-à-dire du côté opposé au corps périphérique 3 par rapport à la paroi latérale principale 12.

Le corps périphérique 3 est destiné à être au contact du récipient de travail 200 lorsque le couvercle chauffant 100 est agencé sur le récipient de travail 200. Le corps périphérique 3 comprend une paroi latérale périphérique 30 définissant un logement 36 propre à entourer au moins partiellement la poignée 201 de l'appareil de préparation culinaire A lorsque le couvercle chauffant 100 est agencé sur le récipient de travail. Par « au moins partiellement », on entend que la paroi latérale périphérique 30 ne recouvre pas intégralement la poignée 201, mais a minima une partie supérieure de la poignée 201, de sorte à pouvoir diriger un flux d'air en sortie autour de la poignée 201 pour refroidir sa surface externe.

Dans le mode de réalisation illustré, la paroi latérale périphérique 30 définit un logement additionnel 37 propre à entourer la poignée additionnelle 202 de l'appareil de préparation culinaire A lorsque le couvercle chauffant 100 est agencé sur le récipient de travail 200. On comprendra que la paroi latérale périphérique 30 peut définir autant de logements 36 que le récipient de travail 200 comprend de poignées 201, 202.

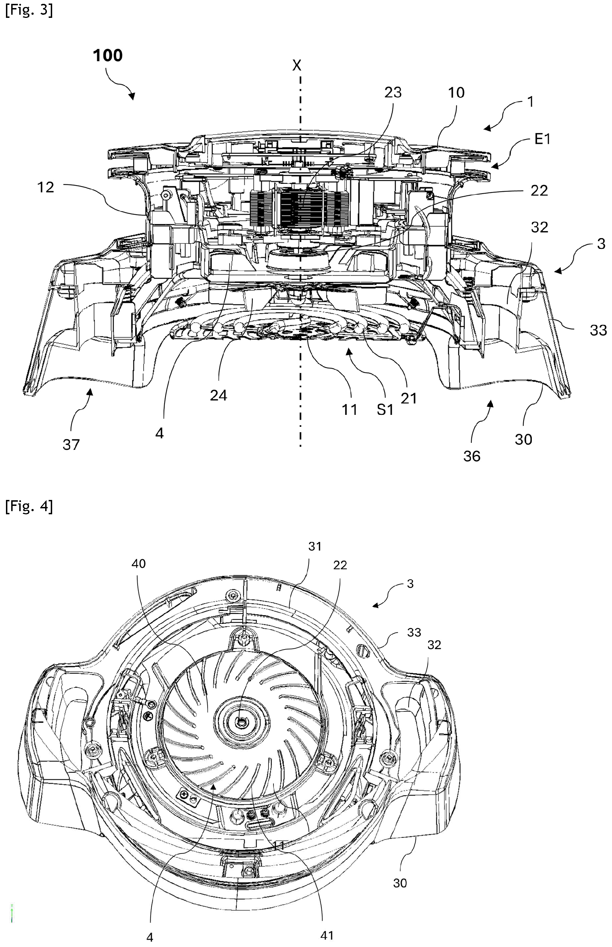

En référence à la figure 3, la paroi latérale principale 12 délimite une cavité à l'intérieur de laquelle est disposé un système de cuisson 2. Dans le mode de réalisation illustré, l'orifice d'entrée d'air E1 est formé par deux ouvertures latérales agencées de part et d'autre du couvercle chauffant 100 entre la paroi extérieure 10 et la paroi latérale principale 12. Ainsi, la cavité communique avec l'extérieur du couvercle chauffant 100 par l'intermédiaire de l'orifice d'entrée d'air E1. De préférence, la paroi latérale 12 comprend une pluralité d'orifices d'évacuation d'air.

Le corps principal 1 comprend une paroi inférieure 11 s'étendant en vis-à-vis de la paroi extérieure 10, d'un côté opposé de la paroi latérale principale 12 par rapport à la paroi extérieure 10. La paroi inférieure 11 est destinée à être en vis-à-vis du récipient de travail 200 lorsque le couvercle chauffant 100 est agencé sur le récipient de travail 200.

Plus précisément, le système de cuisson 2 comprend un élément chauffant 21. L'élément chauffant 21 est par exemple un élément chauffant propre à chauffer l'intérieur du récipient de travail 200 par rayonnement. L'élément chauffant 21 est par exemple une résistance électrique.

L'élément chauffant 21 est par exemple alimenté par un câble d'alimentation 8 destiné à être branché sur une source de courant telle qu'une prise secteur. De préférence, le câble d'alimentation 8 peut être amovible du système de cuisson 2. De façon alternative l'alimentation en courant de l'élément chauffant 21 du couvercle chauffant 100 peut se faire par des moyens sans fil comme des moyens inductifs.

Le nombre, la dimension et la puissance de l'élément chauffant 21 sont adaptés pour obtenir le meilleur ratio coûts /performances.

De préférence, l'élément chauffant 21 est agencé à proximité de la paroi inférieure 11 et recouvre la paroi inférieure 11 de sorte à permettre un chauffage homogène du contenu du récipient de travail 200.

De préférence, le système de cuisson 2 permet une cuisson des ingrédients contenus dans le récipient par rayonnement et par convection. Pour ce faire, le système de cuisson 2 comprend un arbre 22 monté mobile en rotation autour d'un axe X. L'axe X est ici sensiblement vertical et normal au plan formé par la paroi inférieure 11.

Le système de cuisson 2 peut comprendre un moteur 23 configuré pour entrainer l'arbre 22 en rotation autour de l'axe X. Le moteur 23 est par exemple un moteur électrique alimenté par un câble d'alimentation 8 du couvercle chauffant 100.

Le système de cuisson 2 peut comprendre un ventilateur de convection 24 monté solidaire de l'arbre 22 en rotation. Le ventilateur de convection 24 est agencé à une extrémité de l'arbre 22, et orienté en vis à vis de l'élément chauffant 21.

La paroi inférieure 11 peut présenter au moins un orifice de sortie d'air S1, de sorte que la cavité communique avec l'extérieur du couvercle chauffant 100. Ainsi, une rotation de l'arbre 22 autour de l'axe X entraine une circulation d'un flux d'air vers l'au moins un orifice de sortie d'air S1, en balayant l'élément chauffant 21. Le ventilateur de convection 24 peut être propre à entrainer un flux d'air s'écoulant depuis l'au moins un orifice d'entrée d'air E1 de la paroi extérieure 10, ou depuis un orifice d'entrée d'air délimité dans une autre paroi du couvercle chauffant 100.

Dans le mode de réalisation illustré, la paroi inférieure 11 est formée par une plaque métallique circulaire comprenant une pluralité d'orifices circulaires répartis sur sa surface. Selon un autre mode de réalisation, la paroi inférieure 11 comprend une pluralité d'orifices de sortie d'air de forme ovale répartis sur la plaque circulaire de manière concentrique, et avec une section croissante en s'éloignant de l'axe X. Ainsi, le flux d'air peut s'écouler en direction du récipient de travail 200 sur toute la section du récipient.

Dans le mode de réalisation illustré, l'élément chauffant 21 est agencé dans la cavité au-dessus de la paroi inférieure 11, à proximité des orifices de sortie d'air S1. Ainsi, l'air évacué depuis l'intérieur de la cavité vers le récipient de travail 200 à travers l'orifice de sortie d'air S1 est d'abord chauffé par l'élément chauffant 21.

### Refroidissement de la poignée 201

L'appareil de préparation culinaire A comprend en outre un ventilateur de refroidissement 4 monté mobile en rotation autour d'un axe X', de sorte qu'une rotation du ventilateur de refroidissement 4 autour de son axe X' génère un flux d'air de refroidissement s'écoulant depuis l'orifice d'entrée d'air E1 vers le logement 36.

L'axe X' peut être confondu avec l'axe X de l'arbre 22. Le ventilateur de refroidissement 4 est de préférence monté sur l'arbre 22, de sorte qu'une rotation de l'arbre 22 autour de l'axe X génère un flux d'air de refroidissement s'écoulant depuis l'orifice d'entrée d'air E1 vers le logement 36. Cela permet d'avoir un couvercle chauffant 100 plus compact. On comprendra que le ventilateur de refroidissement 4 peut avoir un fonctionnement indépendant du système de cuisson 2. En particulier, le ventilateur de refroidissement 4 peut avoir son propre arbre motorisé s'étendant selon l'axe X'.

Lorsque le couvercle chauffant 100 est agencé sur le récipient de travail 200, la poignée 201 est reçue à l'intérieur du logement 36, c'est-à-dire que le logement 36 entoure et recouvre la poignée 201. Ainsi, le flux d'air de refroidissement éjecté en dehors du couvercle chauffant 100 à travers le logement 36 balaie la poignée 201, qui est ainsi refroidie par convection.

Plus précisément, le ventilateur de refroidissement 4 n'est pas configuré pour diriger le flux d'air de refroidissement en direction de l'orifice de sortie S1, mais permet la circulation de l'air à l'intérieur de la cavité, en direction du logement 36. Le flux d'air de refroidissement ne traverse pas l'élément chauffant 21, de sorte qu'il est à une température inférieure à celle du flux d'air expulsé par l'orifice de sortie d'air S1, dans le mode de réalisation avec un système de chauffage par rayonnement convection décrit précédemment.

De préférence, le ventilateur de refroidissement 4 est agencé entre le ventilateur de convection 24 et le moteur 23, et monté sur l'arbre 22 de sorte que le moteur 23 est balayé par le flux d'air de refroidissement s'écoulant en direction du logement 36.

De préférence, le corps périphérique 3 comprend un conduit de circulation 32 débouchant sur le logement 36, de sorte que le flux d'air de refroidissement s'écoule vers le logement 36 à travers le conduit de circulation. Le conduit de circulation 32 est dirigé en direction de la poignée 201 lorsque le couvercle chauffant 100 est agencé sur le récipient de travail 200. Ainsi, le flux d'air de refroidissement vient balayer les poignées 201, 202 ce qui contribue à les refroidir par convection.

De préférence, le corps périphérique 3 comprend une paroi externe 33 configurée pour entourer au moins partiellement le récipient de travail 200. La paroi externe 33 délimite de préférence le logement 36 pour la poignée 201. Au niveau du logement 36, la paroi externe 33 peut donc former la paroi latérale périphérique 30, ou venir en complément de la paroi latérale périphérique 30, auquel cas un espace peut être délimité entre la paroi latérale périphérique 30 et la paroi externe 33. Cela permet d'isoler la paroi externe 33 de la paroi latérale périphérique 30 en contact avec la poignée 201. Ainsi, la paroi externe 33 du couvercle chauffant 100 est isolée thermiquement du récipient de travail 200 chauffé. Cela permet de réduire la température externe du couvercle chauffant 100, et donc le risque de brûlure ou d'inconfort pour l'utilisateur manipulant le couvercle chauffant 100.

La paroi latérale périphérique 30 peut être fabriquée dans un matériau résistant à la chaleur comprenant un polymère plastique. La paroi latérale périphérique 30 est par exemple fabriquée dans un matériau en polyamide 66, par exemple un polymère de type PA6/66 (Nylon 66) renforcé avec 30 % de fibres de verre. Cela permet d'éviter une déformation de la paroi latérale périphérique 30 à proximité du récipient de travail 200 chauffé. La paroi latérale périphérique 30 peut être réalisée d'un seul tenant par moulage.

### Structure du couvercle chauffant 100

En référence à la figure 4, le corps périphérique 3 comprend une paroi interne 31 délimitant un canal de circulation d'air interne en communication de fluide avec le logement 36. La paroi interne 31 s'étend autour du ventilateur de refroidissement 4, de manière concentrique à la paroi externe 33 du couvercle chauffant 100.

La paroi interne 31 est agencée dans la cavité de sorte que le flux d'air de refroidissement est dirigé vers le logement 36 par le canal de circulation d'air interne. Le canal de circulation d'air interne est ici délimité entre une surface interne de la paroi externe 33, et une surface externe de la paroi interne 31. Le canal de circulation d'air interne pourrait être un conduit rapporté à l'intérieur de la cavité.

La paroi interne 31 permet de rediriger l'air évacué depuis la cavité du corps principal 1 à travers la pluralité d'orifices d'évacuation d'air en direction du logement 36.

De préférence, la paroi interne 31 est formé par une pluralité de parois permettant de guider l'air évacué par les orifices d'évacuation d'air en direction du logement 36 et du logement 36 additionnel, en répartissant équitablement le débit d'air de part et d'autre du couvercle chauffant 100.

Dans le mode de réalisation illustré, le ventilateur de refroidissement 4 est un ventilateur à turbine centrifuge comprenant un disque 40 s'étendant dans un plan normal à l'axe X et une pluralité d'aubes 41 s'étendant depuis le disque 40 d'un côté opposé à l'élément chauffant 21 par rapport au disque 40. L'utilisation de ventilateur à turbine centrifuge permet d'augmenter le débit d'air aspiré par l'orifice d'entrée d'air E1 et évacué par les orifices d'évacuation d'air, sans réduire la compacité du couvercle chauffant 100.

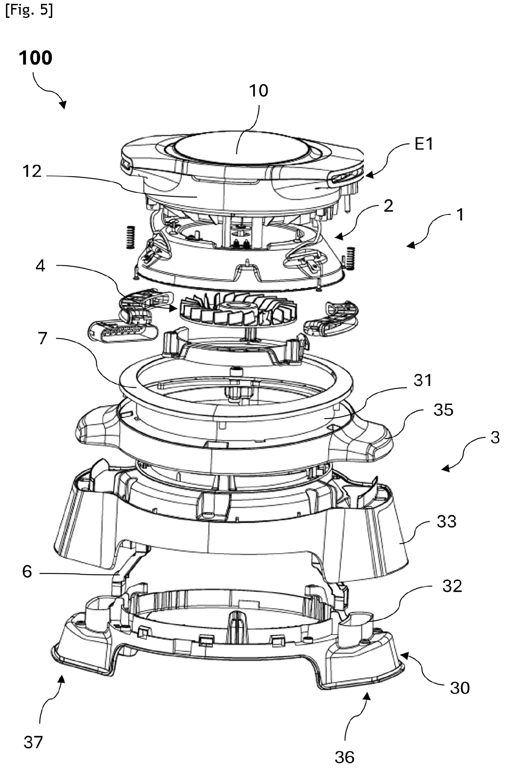

En référence à la figure 5, le corps périphérique 3 est formé par assemblage de plusieurs parties. Le corps périphérique 3 comprend une partie supérieure destinée à recevoir le corps principal 1. La partie supérieure est formée par une paroi supérieure 35.

Le corps périphérique 3 comprend une partie inférieure formée par la paroi latérale périphérique 30 définissant le logement 36 et destinée à être agencée sur le récipient de travail 200. La partie inférieure forme ici le conduit de circulation 32.

Le corps périphérique 3 comprend également la partie intermédiaire formée par la paroi externe 33 configurée pour recouvrir la paroi latérale périphérique 30.

La partie supérieure 35 est montée solidaire de la partie inférieure, par l'intermédiaire de la partie intermédiaire. Le couvercle chauffant 100 comprend des moyens de fixation, par exemple des vis, pour l'assemblage des différentes parties du corps périphérique 3.

La partie supérieure 35 comprend un épaulement destiné à recouvrir l'extrémité du conduit de circulation 32, de sorte à empêcher le passage du flux d'air de refroidissement en dehors du conduit de circulation 32.

Le couvercle chauffant 100 peut comprendre une couronne 7 entre le corps principal 1 et le corps périphérique 3. La couronne 7 est par exemple une couronne chromée et participe à améliorer l'aspect esthétique du couvercle chauffant 100.

### Pilotage et sécurité du couvercle chauffant 100

Le couvercle chauffant 100 peut comprendre un dispositif de sécurité 6. Le dispositif de sécurité 6 est configuré pour alimenter électriquement le couvercle chauffant 100 lorsqu'il est disposé sur le récipient de travail 200 et que la poignée 201 est reçue dans le logement 36, c'est-à-dire lorsque le logement 36 entoure la poignée 201.

Ainsi, le dispositif de sécurité 6 est de préférence configuré pour couper l'alimentation de l'élément chauffant 21 lorsque la poignée 201 n'est pas reçue dans le logement 36.

Le dispositif de sécurité peut être simplement activé par le poids du couvercle 100 lorsqu'il est posé sur le récipient 200 et que la poignée 201 est reçue dans le logement 36.

Par exemple, le dispositif de sécurité 6 comprend un interrupteur comprenant un actionneur mobile en translation. Bien entendu, tout autre dispositif électrique pouvant avoir la faculté d'interrompre le passage d'un courant électrique pourrait être utilisé à la place de l'interrupteur. Le dispositif de sécurité 6 comprend un élément de rappel permettant de maintenir l'actionneur mobile dans une position de sécurité, lorsque le couvercle chauffant 100 n'est pas assemblé sur le récipient de travail 200.

L'actionneur est propre à être reçu dans une ouverture prévue dans la partie inférieure du corps périphérique 3, en dehors du conduit de circulation 32. Lorsque le couvercle chauffant 100 est agencé sur le récipient de travail 200, l'actionneur mobile vient en contact de la poignée 201 et est déplacé en translation depuis la position de sécurité vers une position de fonctionnement.

Lorsque l'actionneur mobile est dans la position de fonctionnement, l'interrupteur est en position fermée, de sorte que l'alimentation électrique de l'élément chauffant électrique 3 est autorisée. A contrario, lorsque l'actionneur mobile est dans la position de sécurité, l'interrupteur n'est pas sollicité et est en position ouverte. Ainsi, le dispositif de sécurité 6 permet de couper automatiquement l'alimentation de l'élément chauffant 21 lorsque le couvercle chauffant 100 n'est pas assemblé correctement sur le récipient de travail 200.

De façon alternative, l'interrupteur peut être remplacé par un interrupteur optoélectronique ou un interrupteur magnétique. L'actionneur mobile est par exemple un bouton poussoir couplé à un levier.

De préférence, l'interrupteur du dispositif de sécurité 6 coupe également l'alimentation électrique du moteur 23, de sorte que le ventilateur de convection 24 et le ventilateur de refroidissement 4 sont à l'arrêt, lorsque le couvercle chauffant 100 n'est pas agencé sur le récipient de travail 200.

Le dispositif de sécurité 6 peut également être configuré pour maintenir le couvercle chauffant 100 fixement sur le récipient de travail 200, lorsque la poignée 201 est reçue dans le logement 36. Cela permet d'éviter une interruption indésirée de la préparation en cas de déplacement involontaire du couvercle chauffant 100.

De préférence, le couvercle chauffant 100 comprend des moyens de commande destinés à piloter les modes de fonctionnement du couvercle chauffant 100. Les moyens de commande comprennent par exemple une carte électronique, propre à être alimentée en électricité lorsque le câble d'alimentation 8 est branché sur une prise secteur. De préférence, le dispositif de sécurité 6 empêche l'alimentation des moyens de commande lorsque le couvercle chauffant 100 n'est pas correctement agencé sur l'appareil de préparation culinaire A.

Le couvercle chauffant 100 peut comprendre un ventilateur configuré pour refroidir la carte électronique, par exemple en aspirant de l'air de l'extérieur, par l'orifice d'entrée d'air E1 ou par un autre orifice dédié. Le ventilateur configuré pour refroidir la carte électronique peut notamment être le ventilateur de refroidissement 4.

Les moyens de commande comprennent de préférence une interface utilisateur, par exemple un écran tactile ou des boutons poussoir, permettant de recevoir une commande de l'utilisateur. Les moyens de commande peuvent être configurés pour piloter la vitesse de rotation du moteur 23 et/ou de l'arbre motorisé du ventilateur de refroidissement 4. Les moyens de commande peuvent être configurés pour piloter le système de chauffage 2, notamment pour piloter l'alimentation électrique de l'élément chauffant 21. Ainsi, le couvercle chauffant 100 agencé sur l'appareil de préparation culinaire A peut être utilisé pour diverses préparations.

## Revendications

1. Couvercle chauffant (100) amovible pour un appareil de préparation culinaire (A) comprenant un récipient de travail (200) et présentant une poignée (201), le couvercle chauffant (100) comprenant :
un corps principal (1) comprenant une paroi extérieure (10) présentant au moins un orifice d'entrée d'air (E1); et
un système de cuisson (2) comprenant un élément chauffant (21) ;
le couvercle étant **caractérisé en ce qu'**il comprend en outre
un corps périphérique (3) comprenant une paroi latérale périphérique (30) définissant un logement (36) propre à entourer au moins partiellement la poignée de l'appareil de préparation culinaire lorsque le couvercle chauffant (100) est agencé sur le récipient de travail,
un ventilateur de refroidissement (4) monté mobile en rotation autour d'un axe (X), et agencé de sorte qu'une rotation du ventilateur de refroidissement (4) autour de l'axe (X) génère un flux d'air de refroidissement s'écoulant depuis l'orifice d'entrée d'air (E1) vers le logement (36).

2. Couvercle chauffant (100) selon la revendication 1, dans lequel le corps périphérique (3) comprend une paroi interne (31) délimitant un canal de circulation d'air interne en communication de fluide avec le logement (36), la paroi interne (31) s'étendant autour du ventilateur de refroidissement (4), de sorte que le flux d'air de refroidissement est dirigé vers le logement par le canal de circulation d'air interne.

3. Couvercle chauffant (100) selon l'une quelconque des revendications 1 et 2, dans lequel le corps périphérique (3) comprend un conduit de circulation débouchant sur le logement (36), de sorte que le flux d'air de refroidissement s'écoule vers le logement (36) à travers le conduit de circulation.

4. Couvercle chauffant (100) selon l'une quelconque des revendications 1 à 3, dans lequel le corps périphérique (3) comprend une paroi externe (33) configurée pour entourer au moins partiellement le récipient.

5. Couvercle chauffant (100) selon la revendication 4, dans lequel un espace est délimité entre la paroi latérale périphérique (30) définissant le logement (36) et la paroi externe (33).

6. Couvercle chauffant (100) selon l'une quelconque des revendications 1 à 5, dans lequel la paroi latérale périphérique (30) est fabriquée dans un matériau résistant à la chaleur comprenant un polymère plastique.

7. Couvercle chauffant (100) selon l'une quelconque des revendications 1 à 6, dans lequel le corps périphérique (3) comprend une partie supérieure destinée à recevoir le corps principal (1), et une partie inférieure comprenant la paroi latérale périphérique (30) définissant le logement (36) et destinée à être agencée sur le récipient de travail (200), la partie supérieure étant montée solidaire de la partie inférieure.

8. Couvercle chauffant (100) selon l'une quelconque des revendications 1 à 7, comprenant en outre une paroi inférieure (11) destinée à être en vis-à-vis du récipient de travail lorsque le couvercle chauffant (100) est agencé sur le récipient de travail (200), la paroi inférieure (11) présentant au moins un orifice de sortie d'air (S1), et dans lequel le système de cuisson (2) comprend en outre
un arbre (22) monté mobile en rotation autour de l'axe (X),
un moteur (23) configuré pour entrainer l'arbre (22) en rotation autour de l'axe (X), et
un ventilateur de convection (24) monté sur l'arbre (22), de sorte qu'une rotation de l'arbre (22) autour de l'axe (X) entraine une circulation d'un flux d'air vers l'au moins un orifice de sortie d'air (S1) en balayant l'élément chauffant (21) ;
et dans lequel le ventilateur de refroidissement (4) est monté sur l'arbre (22) entre le moteur (23) et le ventilateur de convection (24), de sorte que le moteur (23) est balayé par le flux d'air de refroidissement s'écoulant en direction du logement (36).

9. Couvercle chauffant (100) selon l'une quelconque des revendications 1 à 8, dans lequel le ventilateur de refroidissement (4) est un ventilateur à turbine centrifuge comprenant un disque s'étendant dans un plan sensiblement normal à l'axe (X) et une pluralité d'aubes s'étendant depuis le disque d'un côté opposé à l'élément chauffant (21) par rapport au disque.

10. Couvercle chauffant (100) selon l'une quelconque des revendications 1 à 9, comprenant un dispositif de sécurité configuré pour alimenter électriquement le couvercle chauffant (100) lorsque le couvercle chauffant (100) est disposé sur le récipient de travail (200) et que la poignée (201) est reçue dans le logement (36), le dispositif de sécurité étant en outre de préférence configuré pour couper une alimentation de l'élément chauffant (21) lorsque la poignée (201) n'est pas reçue dans le logement (36).

11. Couvercle chauffant (100) selon la revendication 10, lequel le dispositif de sécurité est activé par le poids du couvercle chauffant (100) lorsque le couvercle chauffant (100) est posé sur le récipient (200) et que la poignée (201) est reçue dans le logement (36).

12. Couvercle chauffant (100) selon l'une des revendications 10 et 11, dans lequel le dispositif de sécurité est configuré pour maintenir le couvercle chauffant (100) fixement sur le récipient de travail (200), lorsque la poignée (201) est reçue dans le logement (36).

13. Couvercle chauffant (100) selon l'une quelconque des revendications 1 à 12, pour un appareil de préparation culinaire dont le récipient de travail (200) présente une poignée additionnelle (202), dans lequel la paroi latérale périphérique (30) définit un logement additionnel (37), le logement additionnel (37) étant propre à entourer la poignée additionnelle (202) du récipient de travail (200) lorsque le couvercle chauffant (100) est agencé sur le récipient de travail (200).

14. Ensemble comprenant un appareil de cuisson électrique comprenant
un récipient de travail (200), et
une poignée (201),
l'ensemble comprenant en outre un couvercle chauffant (100) amovible selon l'une quelconque des revendications 1 à 13.

15. Ensemble selon la revendication 14, dans lequel le logement (36) est configuré pour délimiter un canal d'expulsion d'air autour de la poignée (201), lorsque le couvercle chauffant (100) est agencé sur le récipient de travail (200), le flux d'air de refroidissement étant expulsé du couvercle chauffant (100) par le canal d'expulsion d'air.
